# EUROPÄISCHE PATENTSCHRIFT

(11) **EP 0 577 861 B1**
(45) Veröffentlichungstag und Bekanntmachung des Hinweises auf die Patenterteilung: **07.02.1996**
(21) Anmeldenummer: 92111327.0
(22) Anmeldetag: 03.07.1992
(51) Int. Cl.: H04B 3/54, H04B 1/66

(54) **Datenübertragung über elektrische Verteilnetze unter Benutzung des Frequenzsprungverfahrens**
Data transmission by means of electrical distribution lines using frequency hopping
Transmission de données sur un réseau de distribution électrique à saut de fréquence

(43) Veröffentlichungstag der Anmeldung: 12.01.1994
(73) Patentinhaber: ABB PATENT GmbH, D-68309 Mannheim (DE)
(72) Erfinder: Rosch, Rainer, Dr., W-5880 Lüdenscheid (DE); Lehmann, Klaus, Prof. Dr., W-8552 Höchstadt (DE); Zapp, Robert, W-5885 Schalksmühle (DE); Leiner, Matthias, Dr., W-6780 Pirmasens (DE)
(74) Vertreter: Rupprecht, Klaus, Dipl.-Ing.

(56) Entgegenhaltungen:
- DE-A- 3 606 354
- 41ST IEEE VEHICULAR TECHNOLOGY CONF. Mai 1991, NY Seiten 211 - 215 AGUSTI ET AL 'Frequency-Hopping Trellis-Coded 8-DPSK for Indoor Communications'

## Beschreibung

Die Erfindung bezieht sich auf ein Verfahren zur Übertragung von digitalen Daten über elektrische Verteilnetze.

Das Verfahren ist nicht auf bestimmte Anwendungen oder auf bestimmte Spannungsebenen elektrischer Verteilnetze beschränkt, es ist jedoch insbesondere geeignet zur digitalen Datenübertragung über elektrische Installationsnetze.

Die Datenübertragung über das Elektro-Installationsnetz hat den Vorteil, daß an allen wesentlichen Punkten eines Gebäudes Zugang zum Netz besteht und somit keine zusätzlichen Leitungen verlegt werden müssen. Übertragungsprobleme entstehen jedoch dadurch, daß das Installationsnetz nicht zum Zweck der Datenübertragung, sondern zur Energieübertragung konzipiert wurde. Die große Zahl und die Vielfalt der am Installationsnetz angeschlossenen elektrischen Verbraucher bewirken, daß sowohl die Signaldämpfung als auch die Störleistungsdichte des Installationsnetzes zeitvariante und frequenzselektive Größen sind, wobei die Frequenzselektivität ihrerseits zeitvariant ist. Insbesondere Elektrogeräte mit netzparallelen Kondensatoren dämpfen das Sendesignal erheblich und vermindern dadurch die Reichweite. Hinzu kommen Vorschriften, die bei der Bildung von Übertragungssignalen zu beachten sind.

Beispielsweise gelten zur Zeit für die Nachrichtenübertragung über das Installationsnetz eines Gebäudes Vorschriften der Deutschen Bundespost in Form der FTZ-Richtlinie 17 R 2040 (April 1978), die die Sendeleistung auf maximal 5 mW begrenzen, bezogen auf eine Netznachbildung von 50 Ohm. Der zugelassene Frequenzbereich reicht von 30 bis 146 kHz.

Am Markt sind seit Jahren Systeme mit schmalbandiger Datenübertragung etabliert. Ein solches System ist in der Druckschrift BJE 1008/3.92/0502 der Firma Busch-Jaeger Elektro GmbH, Lüdenscheid beschrieben. Die Druckschrift bezieht sich auf einen Netzbus X-10, der geeignet ist zur Übertragung von Steuersignalen über das Installationsnetz. Der Netzbus X-10 arbeitet mit einer 120 kHz-Trägerfrequenz. Impulstelegramme mit dieser Trägerfrequenz werden jeweils unmittelbar nach einem Nulldurchgang der Netzspannung gesendet. In den damit festgelegten Sendezeitbereichen wird ein günstiges Verhältnis von Nutzsignal zu Störsignal erzielt. Das System arbeitet im vorgesehenen Anwendungsbereich zufriedenstellend, ist aber auf Übertragungsraten unter 50 Bit pro Sekunde begrenzt.

Um die Grenzen der Schmalbandübertragung überwinden zu können, wird seit mehreren Jahren die Anwendbarkeit der Bandspreiztechnik zur digitalen Datenübertragung über Stromversorgungsnetze untersucht. Unter den Sammelbegriff "Bandspreiztechnik" fallen unterschiedliche Verfahren zur Bildung eines Sendesignals bzw. zur empfangsseitigen Detektion eines solchen Signals. Zur Anwendung für die Datenübertragung über Stromversorgungsnetze ist unter anderem das Frequenzsprungverfahren vorgeschlagen worden. Ein solches Verfahren ist beispielsweise in der EP-A2-01 99 148 beschrieben. Es wird dort mit einem Sendesignal gearbeitet, das sich aus mehreren Frequenzen zusammensetzt, die aus einem Vorrat an diskreten Frequenzen ausgewählt sind. Die Frequenzen werden nach einem Variationsmuster (Code) innerhalb eines Zeitrasters in wechselnder Zusammensetzung benutzt. Durch Wahl der Frequenzen zur Bildung des Zeitrasters und der Frequenzen des Frequenzvorrats wird ein System orthogonaler Signalformen geschaffen.

Dadurch wird ein Vielfachzugriff auf einen Kanal, also ein gleichzeitiger Sendebetrieb mit mehreren Sendern möglich. Eine Unterscheidbarkeit der beiden Binärsymbole, z.B. 0 und 1 wird dadurch erzielt, daß die für das Sendesignal benutzten Frequenzsätze unterschiedlich sind.

Das Zeitraster für das Frequenzsprungverfahren wird aus der Netzfrequenz gewonnen, die auch empfangsseitig zur Synchronisation benutzt wird. Dieses Vorgehen wirkt sich zwar günstig auf den Realisierungsaufwand aus, schränkt aber die erzielbare Datenrate erheblich ein. Aufgrund des Jitters der Netzwechselspannungs-Nulldurchgänge und des dadurch entstehenden Synchronisationsfehlers kann nämlich die Dauer der einzelnen Zeitabschnitte nicht beliebig klein gewählt werden.

Der Erfindung liegt daher die Aufgabe zugrunde, ein alternatives Verfahren zur Datenübertragung über elektrische Verteilnetze anzugeben, das neben einer hohen Störunempfindlichkeit auch eine hohe Datenrate zuläßt.

Diese Aufgabe wird gelöst durch ein Verfahren zur Übertragung von Daten, die als 0/1 oder (-1)/1-Bitstrom vorliegen, über elektrische Verteilnetze, das nachstehende Schritte aufweist,
a) zur Bildung eines Sendesignals:
a1) Bildung einer Folge von Sendesignal-Koeffizienten p(k) durch
   - Verwendung einer Autokorrelationsfunktion beliebiger Länge, wobei eine Autokorrelationsfunktion mit hohem Haupt- zu Nebenmaximumsverhältnis gewählt ist,
   - Entfaltung der Autokorrelationsfunktion zur Gewinnung der Sendesignalkoeffizienten p(k), die möglichst viele unterschiedliche Stufen enthalten, und
   - Polung der Sendesignalkoeffizienten p(k) in Abhängigkeit von der Folge der zu übertragenden Datenbits (0/1; (-1)/1);
a2) Verwendung der entfalteten Sendefolge p(k) zur Ansteuerung eines spannungsgesteuerten Oszillators, wodurch ein durch die Sendesignalkoeffizienten geprägtes frequenzsprungmoduliertes Sendesignal s(t) erzeugt wird, das übertragen wird;
b) zur empfangsseitigen Rückgewinnung der übertragenen Datenbitfolge aus dem Empfangssignal:
b1) Rückumsetzung des empfangenen frequenzsprungmodulierten Signales mit Hilfe einer PLL-Schaltung in eine mehrstufige Spannung;
b2) Filterung der mehrstufigen Spannung mit einem ein-oder mehrkanaligen Optimalfilter, das so bemessen ist, daß sich am Ausgang die sendeseitig entfaltete Autokorrelationsfunktion ergibt;
b3) Verwendung einer auf das Hauptmaximum des Empfänger-Ausgangssignals angepaßten Schwelle zur Detektion der Bitfolge des übertragenen Datenbitstromes.

Ausgestaltungen des Verfahrens sind in der nachstehenden Beschreibung erläutert und in den Patentansprüchen angegeben.

Beim erfindungsgemäßen Verfahren wird wie bei dem aus der Druckschrift EP-A2 01 99 148 bekannten Verfahren als Sendersignal eine Folge von Frequenzen benutzt. Trotz der Übereinstimmung dieses Teilmerkmals handelt es sich beim erfindungsgemäßen Verfahren um ein völlig anderes Gesamtverfahren, das auf der Optimalfilter-Theorie aufbaut. Wesentliches Merkmal ist die Verwendung einer entfalteten Autokorrelationsfunktion, deren Hauptmaximum empfangsseitig detektiert wird. Die zur Übertragung der entfalteten Autokorrelationsfunktion benutzte Darstellungsform als Frequenzfolge ist vorteilhaft im Hinblick auf die Nutzung des Übertragungskanals und die Störeinflüsse auf diesen Kanal. Da die übertragene Frequenz folge eine entfaltete Autokorrelationsfunktion abbildet, erfolgt empfangsseitig eine im Vergleich zu bekannten Frequenzsprungverfahren andersartige Auswertung des Empfangssignals, nämlich ein Korrelationsempfang mittels Optimalfilter.

Vorteile des Verfahrens bestehen insbesondere darin, daß kein Synchronisationsbaustein erforderlich ist und daß eine hohe Datenübertragungsrate von einigen Kilobit pro Sekunde möglich ist, auch in stark gestörten Netzen. Das Verfahren läßt einen Vielfachzugriff auf einen Übertragungskanal zu, da Sendesignalkoeffizienten gewählt werden können, die orthogonal zueinander sind.

Eine ausführlichere Beschreibung des Verfahrens erfolgt nachstehend anhand der Figuren der Zeichnung, wobei sich die Figuren 1a bis 1e auf die Sendeseite beziehen und die Figuren 2a, 2b und 3 auf die Empfangsseite.

Mit der Erfindung wird angestrebt, empfangsseitig ein Signal mit hohem Haupt- zu Nebenmaximumverhältnis zu gewinnen, das es ermöglicht, den Datenempfang auf eine Schwellwertentscheidung in Hauptmaximumsnähe zu reduzieren. Um dieses Ziel zu erreichen, wird ein Verfahren verwendet, das auf der spektralen Spreizungstechnik oder CDMA (Code Division Multiple Access) basiert und bei dem ein Korrelationsempfang einer vorgegebenen günstigen Autokorrelationsfunktion erfolgt. Für die vorgesehene Anwendung sind Autokorrelationsfunktionen günstig, die möglichst vielstufig sind, wodurch eine Übertragung mit einer Vielzahl von Frequenzen erreicht werden kann. Durch bestimmte Gestaltung der Nebenmaxima läßt sich z.B. auch eine gleichstromfreie Koeffizientenfolge p(k) erzielen.

Als Basis für die Bildung eines geeigneten Sendesignals dient eine segment- oder periodische Autokorrelationsfunktion, die durch Entfaltung, d.h. Faktorisierung, des die Autokorrelationsfunktion beschreibenden Polynoms eine entsprechende, meist mehrstufige Sendefolge ergibt. Geeignete Barker-ähnliche Autokorrelationsfunktionen und Methoden zum Auffinden von Korrelationscodes mit günstigen Autokorrelationseigenschaften sind in den Veröffentlichungen K. Lehmann, "Entwurf von Filterstrukturen zur Erzeugung mehrstufiger Codes mit Barker-Autokorrelations-Eigenschaften", AEÜ, Band 33, (1979), Seiten 190 bis 192 (Ll), K. Lehmann, "Erzeugung mehrstufiger orthogonaler, periodischer Folgen", AEÜ, Band 34, (1980), Seiten 37 bis 40 (L2) und K. Lehmann, "Synthese mehrstufiger Folgen mit Pseudo-Noise-Autokorrelationsfunktion", ntz Archiv, Band 5, (1983), Seiten 233 bis 237 (L3) beschrieben, die insoweit Inhalt dieser Beschreibung sind. In der erstgenannten Literaturstelle L1 ist dargelegt, daß mit mehrstufigen Codes Autokorrelationsfunktionen mit beliebiger Länge erzielbar sind. Es sind vorgebbare Funktionen synthetisierbar. Die aus dieser Literaturstelle entnehmbare damalige Problematik der Nullstellensuche (Faktorisierung) hochgradiger Polynome liegt heute dank leistungsfähiger Hard- und Software nicht mehr vor.

Im Verfahrensschritt a1) geht man von einer solchen synthetisierten Autokorrelationsfunktion aus, die ein hohes Haupt- zu Nebenmaximumverhältnis aufweist. Durch Entfaltung werden Sendesignalkoeffizienten p(k) gewonnen. Diese Sendesignalkoeffizienten können in einer Sendeeinrichtung beispielsweise in einem EPROM gespeichert sein. Eine digitale Steuer- und Recheneinheit, z.B. ein Mikrocontroller verwendet diese gespeicherten Sendesignalkoeffizienten als Sendefolge mit positiven oder negativem Vorzeichen je nach dem zu übertragenden Datenbit 0 oder 1 bzw. -1 oder 1. Die Datenmodulation besteht also einfach in einem Vorzeichenwechsel der Sendefolge p(k).

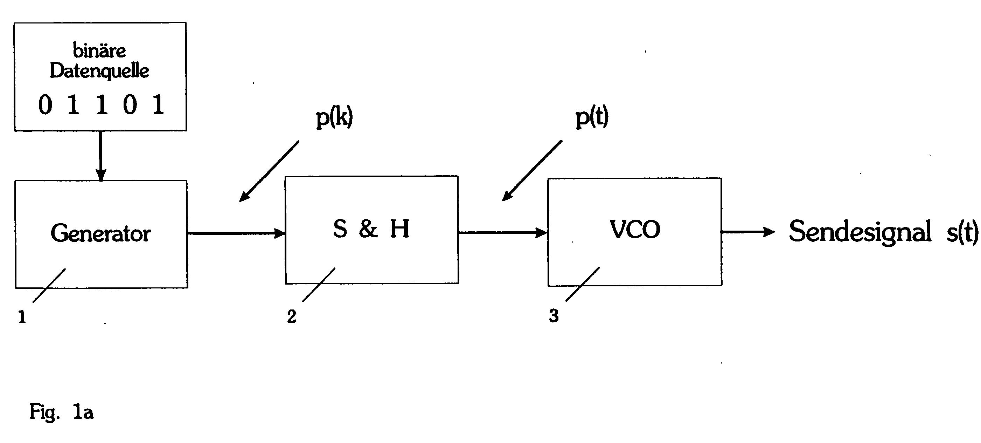

In Figur 1a sind die sendeseitigen Funktionen zur Bildung eines Sendesignals dargestellt. Mit Bezugszeichen 1 ist ein Generator bezeichnet, in dem die zur gewählten Autokorrelationsfunktion (AKF) gehörenden Sendesignalkoeffizienten p(k) generiert oder über eine Schnittstelle zugeführte Koeffizienten-Folgen gespeichert sind. Im Generator 1 erfolgt auch die Datenmodulation, also die Polung der Sendesignal-koeffizienten p(k), in Abhängigkeit von aus einer Datenquelle zugeführten binären Daten. Die vom Generator 1.gelieferte datenmodulierte Folge von Sendesignalkoeffizienten p(k) wird einem nachgeschalteten Abtasthaltekreis 2 (sample and hold) zugeführt, wodurch eine Steuerspannung p(t) entsteht, mit der ein nachgeschalteter, spannungsgesteuerter Oszillator 3 (VCO) angesteuert wird. Der spannungsgesteuerte Oszillator 3 gibt in Abhängigkeit von der Steuerspannung p(t) als Sendesignal s(t) verschiedene Sendefrequenzen aus, die über das ganze zur Verfügung stehende bzw. zulässige Übertragungsband verteilt sind.

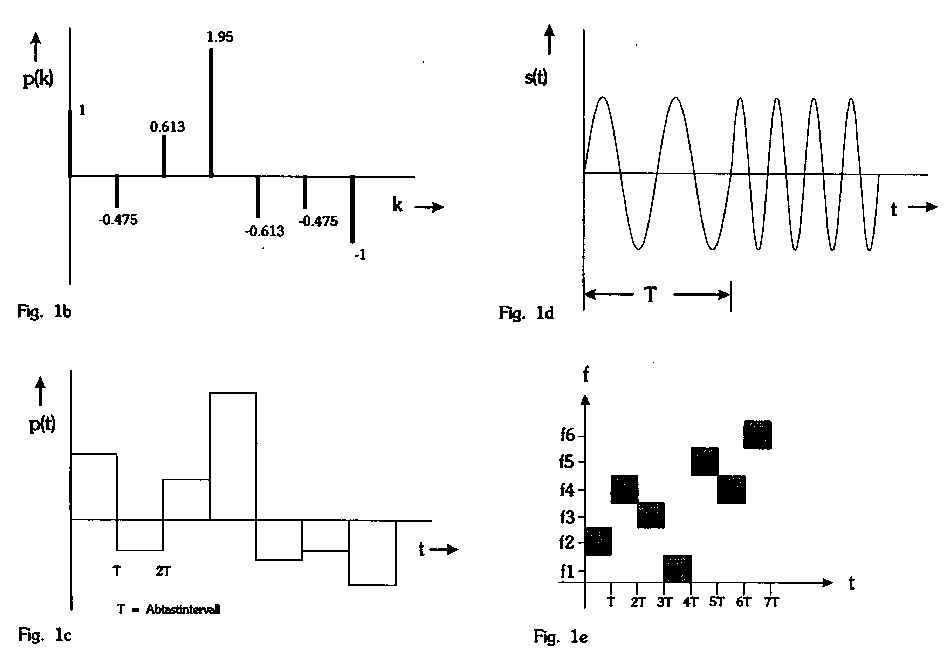

Figur 1b zeigt beispielhaft eine mehrstufige Sendesignalfolge p(k), die durch Entfaltung einer Barker-7-AKF entstanden ist.

Figur 1c zeigt die stufenförmige zugehörige Steuerspannung p(t), die im Abtasthaltekreis 2 erzeugt wird, der die einzelnen Werte der Folge p(k) während der Abtastintervalle T konstant hält.

Figur 1d zeigt einen kurzen Ausschnitt des Sendesignals s(t), nämlich einen Ausschnitt, in dem eine Eingangsspannungsänderung des spannungsgesteuerten Oszillators 2 eine Verdopplung der Ausgangsfrequenz zur Folge hat. Das Sendesignal s(t) soll sich aus einer Folge von Frequenzen zusammensetzen, die über das gesamte zulässige oder zur Verfügung stehende Frequenzband verteilt sind, um eine möglichst gute Nutzung des Frequenzbandes zu erzielen. Diese Frequenzverteilung wird bestimmt durch die unterschiedlichen Stufen der Koeffizientenfolge p(k), welche durch die Parameter Länge der gewählten Autokorrelationsfunktion und Auswahl der Nullstellenpaarung bei der Entfaltung beeinflußt werden können.

Figur 1e zeigt beispielhaft verschiedene Sendefrequenzen f1 bis f6 für die in Figur 1c dargestellte Steuerspannung p(t) in Abhängigkeit der Zeit t.

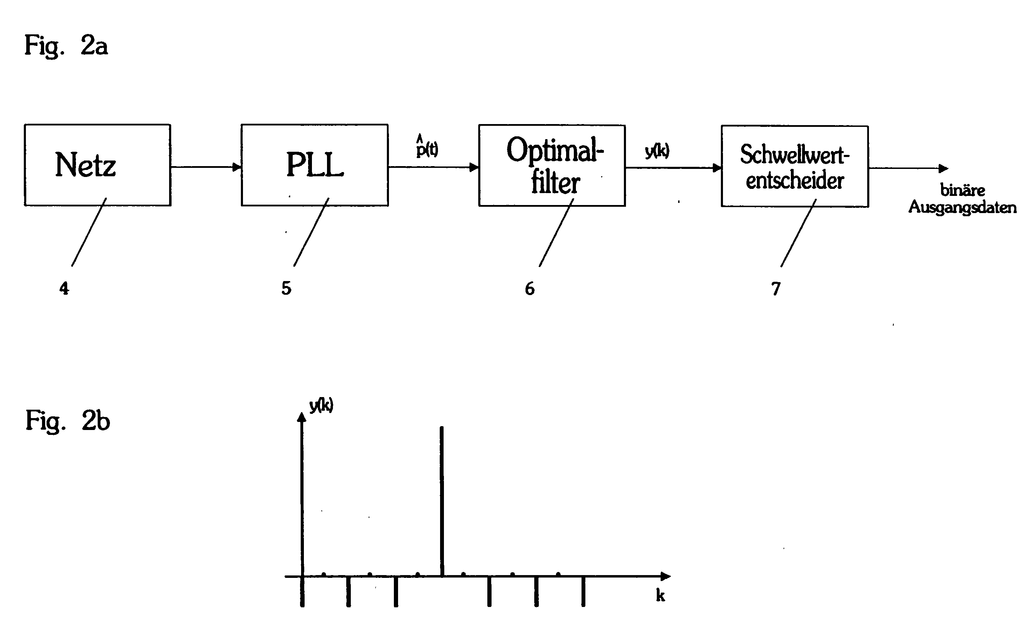

Figur 2a zeigt das Strukturbild des Empfängers, wobei die Übertragungsstrecke als Netz 4 dargestellt ist. Das Netz 4 liefert ein Empfangssignal, das dem durch Störeinflüsse auf der Übertragungsstrecke veränderten Sendesignal entspricht. Mit Hilfe einer PLL-Schaltung 5, also eines Phasenregelkreises, und durch Abtastung mit dem Abtastintervall T wird aus dem Empfangssignal ein der Sendefolge p(t) ähnliches mehrstufiges Spannungssignal p^(t) (Schätzwert p(t)) gebildet. Dieses Signal p^(t) wird einer diskreten Optimalfilterstruktur 6 zugeführt, die am Ausgang die verzögerte AKF liefert.

Figur 2b zeigt beispielhaft ein Filterausgangssignal y(k) in ungestörter Form.

In Figur 2a ist dargestellt, daß das Filterausgangssignal y(k) einem Schwellwertentscheider 7 zugeführt wird, der das Maximum des Signals y(k) detektiert, wobei das Vorzeichen den Wert des übertragenen Datenbits (0,1 bzw. -1,1) angibt.

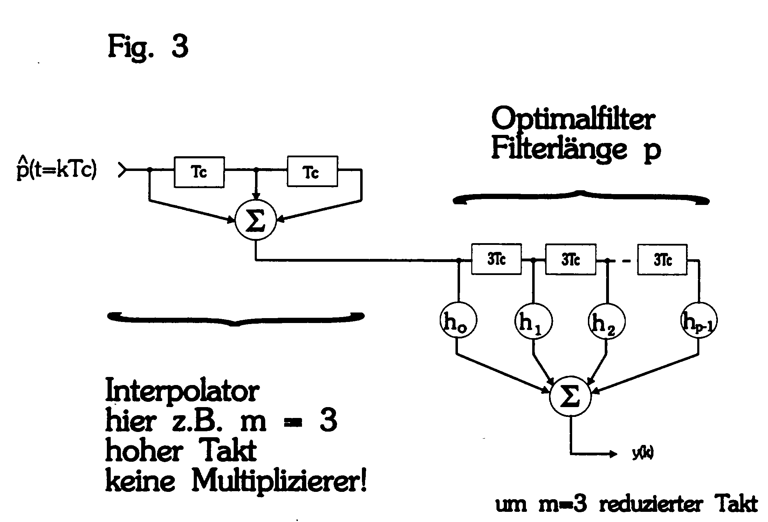

Figur 3 zeigt eine Möglichkeit zur Vereinfachung des Optimalfilters durch eine Kaskadenstruktur. Im Fall einer Überabtastung (Abtastintervall Tc) der erhaltenen Signalform p^(t) kann eine Kaskade mit einem Interpolator, der keine Multiplizierer benötigt, und einem nachfolgenden Optimalfilter gebildet werden. In Figur 3 ist ein Beispiel für eine Überabtastung mit dem Faktor m=3 dargestellt, wodurch ein Optimalfilter mit einer um den Faktor m reduzierten Filterlänge verwendet und mit um m reduziertem Takt betrieben werden kann.

## Patentansprüche

1. Verfahren zur Übertragung von Daten, die als 0/1 oder (-1)/1-Bitstrom vorliegen, über elektrische Verteilnetze, das nachstehende Schritte aufweist,
a) zur Bildung eines Sendesignals:
a1) Bildung einer Folge von Sendesignal-Koeffizienten (p(k)) durch
- Verwendung einer Autokorrelationsfunktion beliebiger Länge, wobei eine Autokorrelationsfunktion mit hohem Haupt- zu Nebenmaximumsverhältnis gewählt ist,
- Entfaltung der Autokorrelationsfunktion zur Gewinnung der Sendesignalkoeffizienten (p(k)), die möglichst viele unterschiedliche Stufen enthalten, und
- Polung der Sendesignalkoeffizienten (p(k)) in Abhängigkeit von der Folge der zu übertragenden Datenbits (0/1; (-1)/1);
a2) Verwendung der entfalteten Sendefolge (p(k)) zur Ansteuerung eines spannungsgesteuerten Oszillators, wodurch ein durch die Sendesignalkoeffizienten geprägtes frequenzsprungmoduliertes Sendesignal (s(t)) erzeugt wird, das übertragen wird;
b) zur empfangsseitigen Rückgewinnung der übertragenen Datenbitfolge aus dem Empfangssignal:
b1) Rückumsetzung des empfangenen frequenzsprungmodulierten Signales mit Hilfe einer PLL-Schaltung in eine mehrstufige Spannung;
b2) Filterung der mehrstufigen Spannung mit einem ein-oder mehrkanaligen Optimalfilter, das so bemessen ist, daß sich am Ausgang die sendeseitig entfaltete Autokorrelationsfunktion ergibt;
b3) Verwendung einer auf das Hauptmaximum des Empfänger-Ausgangssignals angepaßten Schwelle zur Detektion der Bitfolge des übertragenen Datenbitstromes.

2. Verfahren nach Anspruch 1, dadurch gekennzeichnet, daß im Schritt a1) eine Autokorrelationsfunktion verwendet wird, die neben der beliebigen Länge auch eine bestimmte, wählbare Gestaltung der Werte der Nebenmaxima zuläßt, wodurch z.B. auch eine gleichstromfreie Koeffizientenfolge (p(k)) erzeugt werden kann.

3. Verfahren nach einem der vorstehenden Ansprüche, dadurch gekennzeichnet, daß als Optimalfilter eine Filter-Kaskade verwendet wird, die einen Interpolator und ein Optimalfilter mit reduziertem Takt enthält.

## Claims

1. Method for the transmission of data, which are present as a (0/1 or (-1)/1) bit stream, via electrical distribution networks, which method has the following steps,
a) for the formation of a transmission signal:
a1) formation of a sequence of transmission signal coefficients (p(k)) by means of
- the use of an autocorrelation function of any desired length, an autocorrelation function having a high primary to secondary maximum ratio being selected,
- the evolution of the autocorrelation function in order to obtain the transmission signal coefficients (p(k)), which contain as many different levels as possible, and
- polarization of the transmission signal coefficients (p(k)) as a function of the sequence of the data bits (0/1; (-1)/1) to be transmitted;
a2) use of the transmission sequence (p(k)), which has been subjected to evolution, for driving a voltage-controlled oscillator, a frequency-shift-keyed transmission signal (s(t)) shaped by the transmission signal coefficients being generated and transmitted;
b) for the recovery at the receiving end of the transmitted data bit sequence from the reception signal:
b1) reconversion of the received frequency-shift-keyed signal into a multi-level voltage with the aid of a PLL circuit;
b2) filtering of the multi-level voltage with a single-or multi-channel optimum filter which is dimensioned in such a way that the autocorrelation function which is subjected to evolution at the transmitting end is produced at the output;
b3) use of a threshold, which is matched to the primary maximum of the receiver output signal, for detecting the bit sequence of the transmitted data bit stream.

2. Method according to Claim 1, characterized in that in step a1) an autocorrelation function is used which, in addition to any desired length, also permits a specific, selectable configuration of the values of the secondary maxima, as a result of which, for example, a DC-free coefficient sequence (p(k)) can also be generated.

3. Method according to one of the preceding claims, characterized in that the optimum filter used is a filter cascade containing an interpolator and an optimum filter having a reduced clock rate.

## Revendications

1. Procédé pour la transmission de données se présentant sous la forme d'un flux de bits 0/1 ou (-1)/1 sur un réseau de distribution d'électricité, comprenant les étapes suivantes:
a) pour la formation d'un signal d'émission:
a1) formation d'une séquence de coefficients de signaux d'émission (p(k)) par
- application d'une fonction d'autocorrélation de longueur quelconque, une fonction d'autocorrélation avec un rapport maximum principal - maximum secondaire élevé étant retenue,
- développement de la fonction d'autocorrélation pour obtenir les coefficients de signaux d'émission (p(k)) qui contiennent un nombre aussi grand que possible de pas différents et
- polarisation des coefficients de signaux d'émission (p(k)) en fonction de la séquence de bits de données (0/1; (-1)/1) à transmettre;
a2) utilisation de la séquence (p(k)) d'émission développée pour déclencher un oscillateur commandé en tension, lequel oscillateur génère un signal d'émission (s(t)) modulé à sauts de fréquence marqué par les coefficients de signaux d'émission qui est émis;
b) pour l'obtention, côté réception, de la séquence de bits de données transmise à partir du signal de réception
b1) transformation du signal reçu modulé à sauts de fréquence en une tension en escalier au moyen d'un circuit PLL;
b2) filtrage de la tension en escalier à l'aide d'un filtre optimal mono-ou multi-canal dimensionné de manière à obtenir à la sortie la fonction d'autocorrélation développée côté entrée;
b3) utilisation d'un seuil adapté au maximum principal du signal de sortie du récepteur pour la détection de la séquence de bits du flux de bits de données transmis.

2. Procédé selon la revendication 1, caractérisé par le fait qu'à l'étape a1), on utilise une fonction d'autocorrélation qui autorise, outre la longueur quelconque, un agencement déterminé, sélectionné des valeurs de maxima secondaires, ce qui permet de produire par exemple également une séquence de coefficients (p(k)) sans courant continu.

3. Procédé selon l'une des revendications précédentes, caractérisé par le fait que l'on utilise comme filtre optimal une cascade de filtres qui comprend un interpolateur et un filtre optimal à cadence réduite.
